Europäisches Patentamt

European Patent Office

Office européen des brevets

(19)

(11) Veröffentlichungsnummer: **0 169 333**
**B1**

(12) **EUROPÄISCHE PATENTSCHRIFT**

(45) Veröffentlichungstag der Patentschrift: **16.01.91**

(51) Int. Cl.⁵: **A 01 C 7/04**

(21) Anmeldenummer: **85106337.0**

(22) Anmeldetag: **23.05.85**

(54) **Vorrichtung zum Vereinzeln und Verteilen von körnigem Gut.**

(30) Priorität: **28.05.84 DE 3419951**

(43) Veröffentlichungstag der Anmeldung:
**29.01.86 Patentblatt 86/05**

(45) Bekanntmachung des Hinweises auf die
Patenterteilung:
**16.01.91 Patentblatt 91/03**

(84) Benannte Vertragsstaaten:
**AT BE CH DE FR GB IT LI LU NL SE**

(56) Entgegenhaltungen:
**FR-A- 453 651**
**GB-A- 759 040**
**US-E- 29 393**

(73) Patentinhaber: **Karl Becker GMBH & CO K.G.**
**Maschinenfabrik**
**Postfach 44**
**D-3525 Oberweser 1-Gieselwerder (DE)**

(72) Erfinder: **Meyer-Bosse, Jürgen F.W.**
**Emdenstrasse 38**
**D-8000 München 83 (DE)**

(74) Vertreter: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

**Beschreibung**

Die Erfindung betrifft eine Vorrichtung zum Vereinzeln und Verteilen von körnigem Gut nach dem Oberbegriff des Patentanspruchs 1.

Vorrichtungen dieser Art sind insbesondere im Hinblick auf eine zuverlässige Vereinzelung von Körnern aus einer Schüttgutzufuhr unter Einsatz mechanischer und insbesondere pneumatischer Mittel, etwa eines auf die Aufnahmeseite aufgeblasenen Luftstrahls oder eines auf die Rückseite des Zellenrades aufgebrachten Unterdrucks, entwickelt worden.

Dem inzwischen beherrschbaren Problem der exakten Einzelbefüllung des Zellenrades steht das weniger auffällige aber keineswegs weniger kritische Problem eines zuverlässigen und sauberen Auswerfens gegenüber. Eine allenfalls im Bereich der Vereinzelung von Maiskörnern bewährte Auswerfeinrichtung verwendet bislang in eine von der Rückseite (Innenumfang) des Zellenrades bis dicht an die Aufnahmeseite eingetiefte Nut eingreifende Klinge, die im Gehäuse gelagert ist und bei umlaufendem Zellenrad die nacheinander passierenden Körner aus den Ausnehmungen herausdrückt. Bei hinreichend gleichförmig dikken, runden und glattwandigen Maiskörnern läßt sich damit ein der Praxis genügendes Ergebnis erzielen, wenngleich die Auswerferklinge Abrieb an den Körnern und am Rad erzeugt, der sich als Verschmutzung in den Öffnungen und der Nut des Zellenrades festsetzt und den Betrieb stören kann. Auch dort ist die Nut selbst bei enger Auslegung von störendem Einfluß auf die Pneumatik der Vereinzelung, da Nebenöffnungen entstehen.

Die erwähnten Unzulänglichkeiten des bekannten Auswerfers werden schwerwiegend, wenn kleinere, unregelmäßigere und weniger glattwandige Körner zu verarbeiten sind. Es ergeben sich schon bald mit einer weiteren Verkleinerung der Auswerfernut und des Auswerfers Herstellungsaufwand und mechanische Probleme, die größte Schwierigkeiten bei Verunreinigungen und damit kurze Intervalle für einen wartungs- und störungsfreien Arbeitsverlauf bedingen. Von der Konstruktion und der Justierung her sind dann engste Toleranzen anzugeben und ein Wechsel des Zellenrades in einer solchen Vorrichtung setzt dann auch den Austausch und die Einjustierung eines passenden Auswerfers voraus.

Um die Wirkungsweise der Vorrichtung zum Vereinzeln und Verteilen von körnigem Gut auch bei relativ kleinen, unregelmäßig geformten, weich- oder rauhwandigen Körnern zu verbessern, d.h. auch in diesem Fall ein zuverlässiges Auswerfen ohne störende Beeinflussung der Kornvereinzelung in einer robusten und wartungsarmen Betriebsweise zu erreichen, wurde bereits an die Vorrichtung gemäß dem Oberbegriff des Patentanspruchs 1 entwickelt. Eine derartige Vorrichtung ist dem Dokument FR—A 453651 zu entnehmen. Hierbei wird von einem pneumatischen Effekt Gebrauch gemacht, um die Körner auszuwerfen, wobei an der Rückseite des Zellenrades Druckluft angelegt und die Druckluftenergie dazu genutzt wird, das in der jeweiligen Zelle aufgenommene Korn beim Überstreichen der Auswerferkopfmündung auszustoßen.

Im bekannten Fall ist im Bereich der Abgabestation ein ortsfester Kanal vorgesehen, der mit einem Trägerring für den Zellenkranz einstückig verbunden ist. Sobald sich eine Zelle der pneumatisch arbeitenden Auswerfvorrichtung nähert, wirkt die im Kanal vorhandene Luft mit zunehmender Intensität auf die mit der Zelle in Verbindung stehende Innenbohrung ein, um das in der Zelle aufgenommene Korn auszustoßen. Das Zellenrad steht über den gesamten Umfang in Gleitkontakt mit einem Trägerring.

Der Erfindung liegt deshalb die Aufgabe zugrunde, die Vorrichtung zum Vereinzeln und Verteilen von körnigem Gut, inbesondere an Einzelkornsämaschinen, gemäß dem Oberbegriff des Patentanspruchs 1 derart weiterzubilden, daß sich ein wartungsarmer und zuverlässiger Samenabgabebetrieb auch für unregelmäßig geformte, weich- oder rauhwandige Körner ergibt.

Diese Aufgabe wird durch die im kennzeichnenden Teil des Patentanspruchs 1 angegebenen Merkmale gelöst.

Erfindungsgemäß wird die Lagerung des Auswerferkopfs gegenüber dem Zellenkranz dazu herangezogen, um den zum Ausstoß des Samens erforderlichen Druckstoß bereitzustellen. Dadurch ergibt sich nicht nur eine zuverlässige Abgabe des vereinzelten Korns, sondern darüber hinaus eine ständige Selbstreinigung des Zellenrades gegenüber Staub und Schmutz. Dabei wird in vorteilhafter Weise von dem Effekt Gebrauch gemacht, daß der beim Aufsteuern der Mündung auf die Durchgangsbohrung einwirkende Druckstoß nach dem Venturi-Prinzip eine verhältnismäßig starke Strömung in der Durchgangsbohrung induziert, die dadurch noch verstärkt wird, daß Luft aus dem Luftkissen-Spalt abgesaugt und der Auswerferkopf dadurch auf den Zellenkranz zu bewegt wird. Dadurch stellt das Luftpolster unter dem schwebenden bzw. schwimmenden Auswerferkopf eine Art Druckspeicher mit verhältnismäßig hohem Druck dar, was den für ein zuverlässiges Auswerfen vorteilhaften Druckimpuls verstärkt. Der dem Abbau des Luftpolsters mit einer Setzbewegung folgende Auswerferkopf erfüllt darüber hinaus infolge seiner Masse die weitere Funktion, den Druckstoß zu verstärken und einen Nachstoßeffekt bereitzustellen. Auf diese Weise ist gewährleistet, daß auch relativ fest eingeklemmte Einzelkörner ausgestoßen werden.

Von zusätzlichem Vorteil ist darüber hinaus, daß durch den erfindungsgemäßen Aufbau die Verschmutzungsgefahr der Abgabestation stark verringert werden kann. Durch die druckschlüssige Ankopplung des Auswerfers an das Zellenrad wird ein Festreiben oder Festmahlen von Schmutz am Zellenrad wirksam ausgeschlossen. Der über das luftkissen abgestütze Auswerfer erzeugt einen Blasstrom in und gegen die Laufrichtung innerhalb des Zellenrades, wodurch Verschmutzungen in und durch die Durchgangsbohrungen getrieben werden.

Mit den anmeldungsgemäßen Maßnahmen wird die Möglichkeit eröffnet, die Durchgangsbohrungen mit einfachen Querschnitten, beispielsweise runden und geschlossenen Querschnitten auszustatten, um die Druckluft vom Auswerfer günstig von innen an das Korn zu bringen.

Soweit Verunreinigungen auf die Rückseite des Zellenrades gelangen, sorgt der Luftspalt zwischen Auswerferkopf und Zellenrad für ein Ablösen und Entfernen von losen Partikeln und damit für eine laufende Reinigung des Zellenrades — während kerkömmliche mechanisch schleifende Auswerfer eher zu einem Festreiben von Schmutz- und Abfallteilchen führten.

Da der Luftspalt zwischen Auswerferkopf und Zellenrad keine konstante Druckluft erhält, sondern Druckluftstöße und Druckeinbrüche im Zusammenhang mit dem Ausstoßen von Körnern erfährt, ergibt sich hierdurch eine verstärkte Reinigungswirkung. Indem der Auswerferkopf beweglich mit einem gewissen Bewegungsraum in Richtung auf das Zellenrad hin und von diesem weg gelagert ist, können die Druckluftstöße und Vibrationen noch gefördert werden. Der durch sein Eigengewicht oder ggf. auch durch Federandruck zum Zellenrad hin gedrängte Auswerferkopf lagert auf federndem Luftkissen. Zweckmäßig wird durch geeignete Anschläge sichergestellt, daß der Auswerferkopf nicht völlig zur Anlage und Reibeingriff gegen das Zellenrad gelangt, sondern einen minimalen Restluftspalt einhält. Der bewegliche Auswerferkopf führt dann als Reaktion auf die Druckluftschwankungen des Luftkissens zum Zellenrad hin Reaktionsbewegungen und Schwingungen aus, die die Abförderung von Schmutzpartikeln verstärken.

Weitere Merkmale und Vorteile der Erfindung ergeben sich aus den Ansprüchen und der nachfolgenden Beschreibung, in der ein Ausführungsbeispiel des gegenstands der Erfindung anhand einer Zeichnung näher erläutert ist. In der Zeichnung zeigen:

Fig. 1 eine vereinfachte Gesamtansicht einer Säeinheit einer Einzelkornsämaschine mit einer ersten Ausführungsform der vorrichtung zum Vereinzeln und verteilen von körnigem Gut;

Fig. 2 eine vergrößerte, teilweise schnittbildliche Teilansicht der Säeinheit;

Fig. 3 eine vergrößerte schnittbildliche Ansicht des Details III in Fig. 2;

Fig. 4 einen Schnitt nach Linie IV—IV in Fig. 3;

Fig. 5 einen Schnitt nach Linie V—V in Fig. 3;

Fig. 6 eine Seitenansicht einer Auswerferkopf-Bodenplatte; und

Fig. 7 Draufsichten auf verschiedene Auswerfer-Bodenplatten mit der Seitenansicht gemäß Fig. 6.

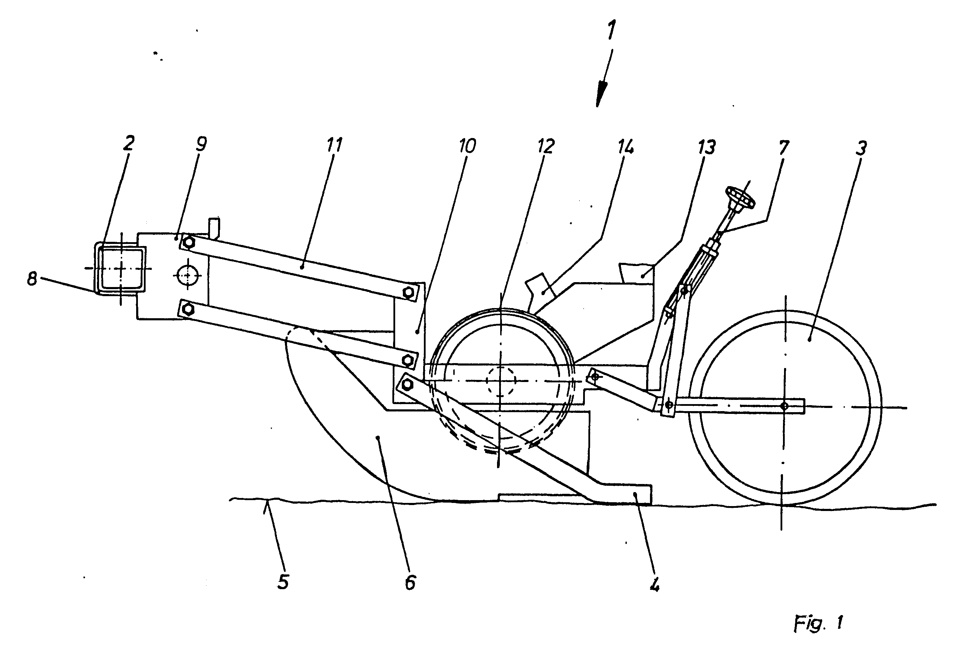

Die in der Fig. 1 dargestellte, insgesamt mit 1 bezeichnete Säeinheit 1 einer Einzelkornsämaschine kann typischerweise eine von mehreren nebeneinander mit dem gewünschten Reihenabstand an einem Hauptbalken 2 einer Einzelkornsämaschine — lösbar und veränderbar -festgeklemmten Säeinheiten sein. Sie stützt sich eigenständig mit einer Saatandruckrolle 3 und einem Zustreicher 4 auf dem mit 5 angedeuteten Bodenniveau ab, während ein starr mit Andruckrolle und Zustreicher 4 verbundenes Säschar 6 vorauslaufend in den Boden eindringt und mit seiner Einschnittiefe die Ablagetiefe für einzubringendes Saatgut verstellt, wobei die Eindringtiefe über eine Spindel 7 zur Lagerung der Andruckrolle 3 hin verstellbar ist.

Da der üblicherweise von einem Schlepper oder anderen Fahrzeug geführte Hauptrahmen 2 und ein über eine Bügelschraube 8 an diesem angeklemmter Anlenkkopf 9 nicht dem Bodenniveau der Andruckrolle 3 folgen, ist zwischen diesem und einem fest mit dem Säschar 6 verbundenen Maschinenträger 10 ein Parallelogramm-Lenker 11 eingeschaltet, der die Säeinheit 1 höhenbeweglich nachführt.

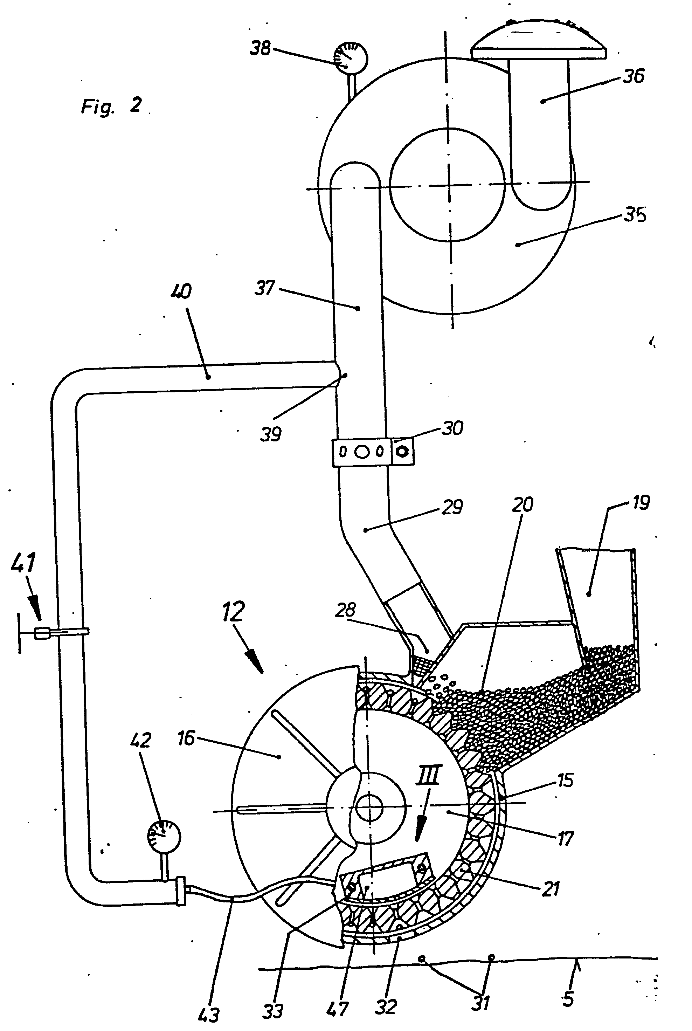

fest mit dem Geräteträger 10 verbunden ist ein Zellenradgehäuse 12, ein Saatgutgehäuse 13 und eine Luftzuführung 14, woraufanhand der Fig. 2 noch näher einzugehen ist, die auch die erfindungsgemäßen Gestaltungen näher veranschaulicht, während die Fig. 1 im wesentlichen vorbekannte Merkmale erkennen läßt.

Die Fig. 2 veranschaulicht das (teilweise schnittbildlich dargestellte) Zellenradgehäuse 12 und die im Sinne der Vereinzelung und Verteilung functionell zugeordneten Aggregate. Das Zellenradgehäuse 12 besteht aus einer Gehäuseschale 15 und einem Gehäusedeckel 16, die einen zylindrischen Innenraum umschließen, in dem sich ein Zellenrad 17 mit zur Bewegungsrichtung der Säeinheit gerichteter Achse 18 drehen kann. Der nicht dargestellte Antrieb des Zellenrades kann bekannter Art sein, zweckmäßig synchronisiert mit der Bewegung der Säeinheit gegenüber dem Boden.

Dem Zellenrad 17 wird von einer Vereinzelungsstation durch eine Durchbrechung der Ringwand der Gehäuseschale 15 aus einem Saatgutgehäuse 19 Saatgut als schüttfähige Masse zugeführt, aus der die Körner zu vereinzeln sind. Dazu besteht es im wesentlichen aus einem felgenartigen Zellenkranz bzw. Radteil 21, welches einseitig über eine flache Radscheibe 22 im Bereich der Achse 18 an dem Zellenradgehäuse 12, d.h. dessen Gehäusewanne 15, gelagert ist. Somit weist das Zellenrad 17 eine verbreiterte Umfangskante als Aufnahmeseite 23 und einen gegenüberliegenden Innenumfang als Rückseite 24 auf, zwischen denen radial von innen nach außen Durchgangsbohrungen 25 in vorgegebenen Winkelabstand über den Umfang verteilt hindurchgehen. Die Durchgangsbohrungen 25 münden außenseitig in eine Zelle 26 für die Aufnahme eines einzelnen Saatkorns. Die Zelle 26 hat die Grundform eines von der Aufnahmeseite 23 nach innen bis zu der Durchgangsbohrung 25 kegelig zulaufenden Ausnehmung. Zur Rückseite 24 hin mündet die Durchgangsbohrung 25 gleichfalls in eine eingesenkte Kegelausnehmung 27 ein.

Eine solche Gestaltung des Zellenrades kann in an sich bekannter Weise für ein Vereinzeln von Saatkörnern verwandt werden, indem aus der Saatkammer 19 überschüssig in die Zellen einrieselndes Saatgut durch eine Düse 28 bis auf ein einzelnes Korn ausgeblasen wird, welches die Durchgangsöffnung 25 abgedeckt hält und den Blasluftstrom (für die anderen Körner) nach oben ablenkt, während es selbst infolge seiner Hohllage niedergehalten bleibt. Die Blasluftzufuhr erfolgt über eine Leitung 29 in einer mittels eines Drosselschiebers 30 regulierbaren Weise. Das somit in Form eines Korns je Zelle vereinzelte Saatgut wandert mit dem bei der Ansicht gemäß Fig. 2 im Gegennuhrzeigersinn innerhalb des Zellenradgehäuses 12 umlaufenden Zellenrad um mehr als einen halben Umlauf, genauer um einen Winkel von etwa 210°, herum und soll dann in vorgegebenem Abstand wie die Körner 31 in Fig. 2 an einer Abgabestation durch eine Öffnung 32 in der Gehäuseschale 15 ausgeworfen werden.

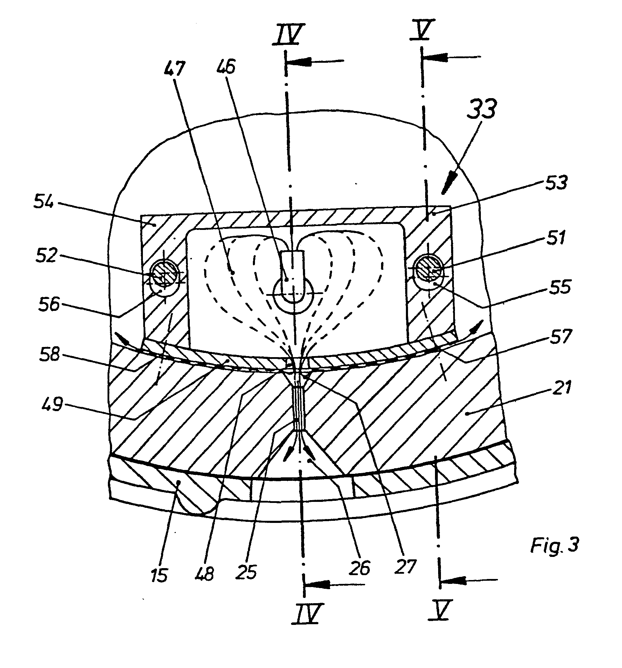

Hierzu dient eine in den Fig. 3 bis 5 näher veranschaulichte Auswerfvorrichtung mit einem Auswerferkopf 33, der innenseitig eine Kammer 47 umschließt, welche mit Druckluft gespeist wird.

Die Druckluft wird in einem Gebläse 35 mit Ansaugrohr 36 und Druckrohr 37 erzeugt und dort mit einem Manometer 38 überwacht. Die Förderleistung ist so bemessen, daß sie gleichzeitig die bereits erwähnte Düse 28 auf der Eingebeseite des Zellenrades 17 versorgen kann. Von einer Leitungsteilung 39 führt zunächst eine starre Druckluftleitung 40 mit einem einstellbaren Drosselventil 41 und einem den eingestellten Druckwert anzeigenden Manometer 42 hinter dem Drosselventil und dann eine anschließende flexible (Schlauch-) Leitung 43 durch den Deckel 16 des Zellenradgehäuses 12 zu einem am Auswerferkopf 33 befestigten Stecknippel 44, auf den die Leitung 43 mit Hilfe einer Schlauchschelle 45 befestigt ist.

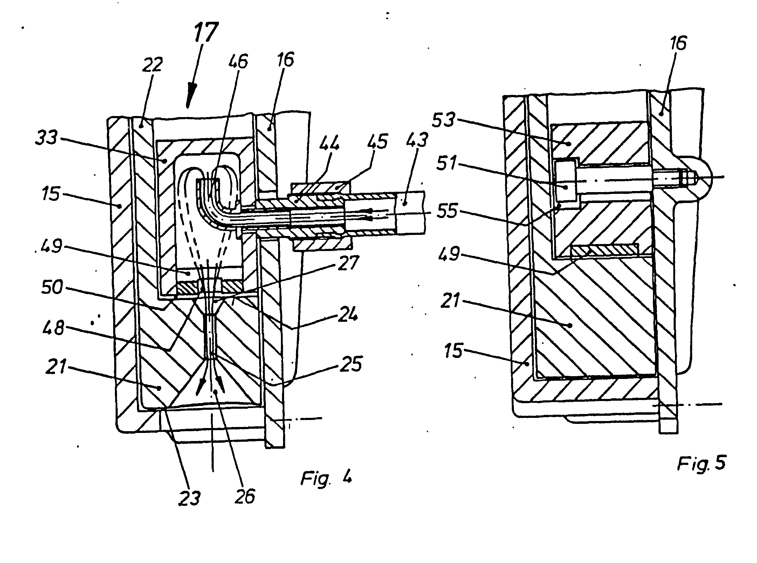

Der Stecknippel 44 geht in ein nach oben abgekrümmtes Einspeisungsrohr 46 über, welches durch die wand des Auswerferkopfes 33 hindurch in dessen Innenkammer 47 hineinragt. Der Stecknippel hat, wie aus Fig. 4 ersichtlich, zumindest ober- und unterseitig Bewegungsspiel gegenüber dem Deckel 16, so daß eine Beweglichkeit in vertikaler Richtung durch die Druckluftzuführung nicht behindert ist.

In der Innenkammer 47 staut und verteilt sich die zugeführte Druckluft, wobei die quer gegen die obere Wand der Innenkammer 47 gerichtete Einströmung die Ausbildung stehender Wirbel unterdrückt. Der Austritt der Druckluft aus der Innenkammer 47 erfolgt über eine Mündung 48 in einer Bodenplatte 49 des Auswerferkopfes 33. Diese Bodenplatte ist kufenartig gekrümmt, um eine weitgehende Angleichung an den Kreiszylinder-Bogen der Rückseite 24 des Zellenrades 17 zu erzielen. Dabei wird ein Luftspalt 50 zwischen Auswerferkopf 33 und Zellenrad-Rückseite 24 ermöglicht, indem durch die Mündung 48 hindurch Luft eintreten kann. Es ergibt sich ein praktisch reibungsloses Luftlager mit Luftkissen-

Effekt — der durch sein Eigengewicht nach unten tendierende Auswerferkopf 33 Schwebt quasi als Luftkissen-Schiffchen über dem Zellenrad 17, wobei en periodische Hub-und Setzbewegungen ausführt.

Die Mündung 48 liegt aber auch in der gleichen Axialebene wie die Durchgangsbohrungen 25 im Zellenrad. Die in der Aufeinanderfolge des Zellenrad-Umlaufs die Mündung 48 passierenden Durchgangsbohrungen erhalten über die Mündung 48 kurzzeitig einen Druckluftanschluß, der auch durch die Kegelbohrung 27 an der Oberseite der Durchgangsbohrung 25 gefördert wird. Durch die relativ große Mündung 48 gelangt die Druckluft mit geringem Abfall in die Zelle 26, um dort ein etwa festsitzendes oder haftendes Korn zu lösen und auszuwerfen. Der Luftdruckstoß baut sich mit dem Lösen des Korns ab, desgleichen tritt natürlich kein nennenswerter Druckaufbau über einem von vornherein lose in der Kornkammer 26 liegenden Korn auf — die Durchgangsbohrung 25 mit Einlaufkegel 27 und Diffusorkegel — Zelle 26 wirkt dann mit Beschleunigung und Druckrückgewinn wie ein Venturirohr.

In jedem Fall wird ein zuverlässiges und exaktes Auswerfen ermöglicht, ohne daß das Korn mechanisch beansprucht wird und, insbesondere, ohne daß die Auswerfereinrichtung mit schleifenden, das Zellenrad von der Rückseite bis in die Zelle hinein durchgreifenden Auswerfern reibungs- und schmutzanfällige mechanische Teile benötigte. Vielmehr hat die Durchgangsbohrung 25 eine einfache und nicht nur für das Auswerfen, sondern auch für das Vereinzeln anzustrebende Form.

Gleichzeitig erhält das gesamte Zellenrad eine Selbstreinigung Abrieb, Staub, Kornpartikel, die mit den Körnern in die Zellen 26 und von diesen weiter in die Durchgangsbohrung gelangen, werden zu einem erheblichen Teil mit dem Auswerfer-Luftdruckstoß ausgeblasen. Soweit diese weiter in das Innere des Zellenrades, d.h. insbesondere auf die Rückseite 24 gelangen, werden diese nicht etwa durch mechanische Auswerferteile festgerieben, sondern in Umfangsrichtung fortgeblasen, bis sie über eine der Durchgangsbohrungen 25 nach außen gelangen.

Dabei ist auch förderlich, daß der Luftkissen-Schwebezustand des Auswerferkopfes 33 nicht gleichmäßig ist, sondern schon in Reaktion auf die Auswerfer-Luftdruckstöße auch Eigenschwingungen umfaßt, die ihrerseits wieder zu Luftdruckstößen im Luftspalt 50 führen und dessen Reinigungsfunktion verstärken. Damit der Auswerferkopf entsprechende Bewegungen ausführen kann, ist er mit einem ausreichenden Spiel gegenüber dem Deckel 16 gelagert. Zwei Kopfschrauben 51 und 52 durchgreifen quer zur Bewegungsrichtung des Zellenrades liegende Seitenwände 53 und 54 des Auswerferkopfes 33 in Bohrungen 55, 56, die dem Auswerferkopf insbesondere in vertikaler Richtung ein erhebliches Bewegungsspiel belassen. Allerdings ist dieses Spiel für Bewegungen nach unten hin so begrenzt, daß der Auswerferkopf 33 gerade nicht zu einer reibenden Anlage gegen das Zellenrad 17 kommen kann. Von der Druckluftzuleitung her ist die Beweglichkeit mit der Flexibilität des Schlauchs 43 gegeben.

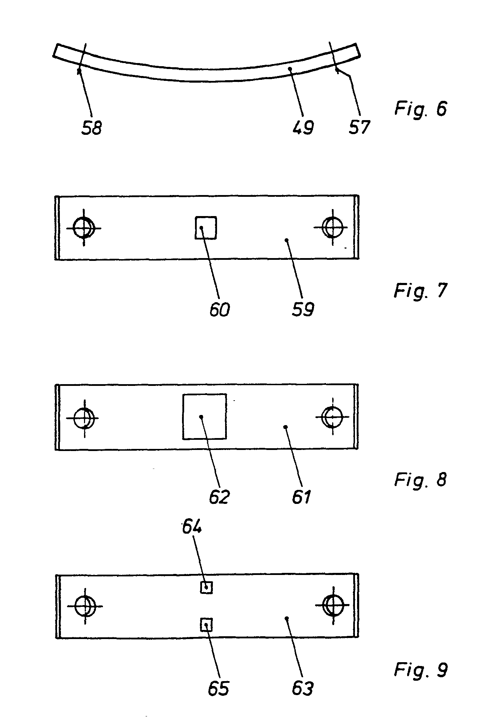

Die Bodenplatte 49 ist mittels zweier in die Seitenwände 53 und 54 des Auswerferkopfes 33 eingreifender Verschraubungen 57 und 58 einfach lösbar und auswechselbar. Dies hat den Vorteil, daß unterschiedliche Bodenplatten einsetzbar sind, die jeweils passende Schablonen für verschiedene Aufgaben darstellen, wenn nämlich auch die Zellenräder für unterschiedliche Aufgaben ausgewechselt werden. Größere Körner verlangen größere Zellen 26, dazu passende Durchgangsbohrungen 25 und Einlaufkegel 27 und zweckmäßig auf der Seite des Auswerferkopfes auch dazu passende Mündungsöffnungen 48. Folglich entspricht eine Bodenplatte 59 nach Fig. 7 mit einer mittleren Mündungsöffnung 60 der Schablone für ein mittleres Korn; eine Bodenplatte 61 nach Fig. 8 mit einer größeren Mündungsöffnung 62 ist auf größeres Korn, z.B. Mais abgestimmt. In Fig. 9 ist eine Bodenplatte 63 mit zwei nebeneinanderliegenden kleinen Mündungsöffnungen 64, 65 zu sehen, die für kleineres Korn bestimmt sind, dem auf dem Zellenrad neben in dem Abstand der Mündungsöffnungen 64, 65 nebeneinanderliegende Reihen von Zellen zur Verfügung gestellt werden können. Bei kleinem Korn können noch mehrere dieser Reihen vorgesehen werden, wobei es gerade eine Stärke des neuen Auswerfers ist, auch solche herkömmlich nicht zufriedenstellend beherrschbaren Einzelkorn-Aussaaten kleiner Korngrößen zu ermöglichen. Bei unterschiedlicher Schablonengestaltung ist die Seitenansicht der Bodenplatten jeweils die der Fig. 6.

Auch die Form der Mündungsöffnungen ist von Einfluß. Die Rechteckform der Mündungsöffnung soll für einen möglichst raschen Druckaufbau in der Durchgangsbohrung 25 sorgen, wobei für einen vollen Durchlaß dadurch gesorgt ist, daß die Mündungsöffnung etwa der Öffnung des Einlaufkegels 27 zur Durchgangsbohrung 25 entspricht. Ein kurzzeitiger, voller Druckaufbau ist zum einen für ein kraftvolles Auslösen des Korns aus der Zelle von Interesse, zum anderen aber auch hinsichtlich seiner Kurzzeitigkeit von Vorteil, damit der Luftkisseneffekt unter dem Auswerferkopf möglichst lange aufrechterhalten und schnell wieder aufgebaut ist.

Bei einem Wechsel der auszusäenden Sorte kann der Änderung des Korns in Größe und Form also mit einem Wechsel des Zellenrades und der Auswerfer-Schablone zur Anpassung von deren Mündung oder Mündungen entsprochen werden. Dabei ist auch der zugeführt Luftdruck anhand des Manometers 42 zu kontrollieren und erforderlichenfalls durch das Drosselventil 41 einzuregulieren. Damit stellt sich die mit einer pneumatischen Auswerfeinrichtung ausgestaltete Säeinrichtung mit der vorstehend beschriebenen Vorrichtung zum Vereinzeln und Verteilen von körnigem Gut.

**Patentansprüche**

1. Vorrichtung zum Vereinzeln und Verteilen von körnigem Gut, insbesondere an Einzelkornsämaschinen, mit einem innerhalb eines Gehäuses (12) drehbaren Zellenrad (17) mit radial nach außen offenen Zellen (26), deren Boden radial nach innen in eine Durchgangsbohrung (25) zum Innenumfang (24) eines Zellenkranzes (17, 21) übergeht und in die an einer Vereinzelungsstation jeweils ein Korn einlegbar ist, das an einer in Drehrichtung versetzten Abgabestation (33, 47) mit Hilfe einer pneumatisch arbeitenden Auswerfvorrichtung ausgestoßen wird, die radial innerhalb der im Zellenkranz ausgebildeten Zellen (26) angeordnet ist und einen Auswerferkopf (33) besitzt, der eine luftbeaufschlagte Mündung (48) hat, die beim Umlauf des Zellenrades von den Durchgangsbohrungen (25) der Zellen (26) überstrichen wird, dadurch gekennzeichnet, daß der Auswerferkopf (33) zwischen sich und dem Innenumfang (24) des Zellenkranzes (17, 21) einen die Mündung (48, 60, 62, 64, 65) umgebenden und von dieser mit Druckluft beaufschlagten Luftkissen-Spalt bildet und gegenüber dem Gehäuse radial begrenzt beweglich gelagert ist.

2. Vorrichtung nach Anspruch 1, dadurch gekennzeichnet, daß der Auswerferkopf (33) zumindest in einem die Mündung (48) umschießenden Bereich der Form der Rückseite (24) des Zellenrades (17) angepaßt ist.

3. Vorrichtung nach Anspruch 1 oder 2, dadurch gekennzeichnet daß der Auswerferkopf (33) gegenüber dem Gehäuse (12) über spielbehaftete Verbindungselemente (51, 52, 55, 56) so gelagert ist, daß er in der engstmöglichen Annäherung an das Zellenrad (17) einen minimalen reibungsfreien Bewegungsspalt (50) freiläßt.

4. Vorrichtung nach einem der Ansprüche 1 bis 3, dadurch gekennzeichnet, daß der Auswerferkopf (33) eine zumindest abschnittsweise flexible Druckluft-Zuleitung (43) aufweist.

5. Vorrichtung nach einem der Ansprüche 1 bis 4, dadurch gekennzeichnet, daß der Luftkissen-Spalt mit einstellbarer Druckluft beaufschlagt ist.

6. Vorrichtung nach Anspruch 5, dadurch gekennzeichnet, daß in einer Zuleitung (40) des Auswerferkopfs (33) ein einstellbares Drosselglied (41) vorgesehen ist.

7. Vorrichtung nach Anspruch 6, dadurch gekennzeichnet, daß in der Druckluft-Zuleitung zwischen dem Drosselglied (41) und dem Auswerferkopf (33) ein Druckmanometer (42) vorgesehen ist.

8. Vorrichtung nach einem der Ansprüche 1 bis 7, dadurch gekennzeichnet, daß der Auswerferkopf (33) innenseitig eine Kammer (47) umschließt, die mit Druckluft gespeist wird und aus der letztere über die Mündung ausströmt.

9. Vorrichtung nach Anspruch 8, dadurch gekennzeichnet, daß sich die Mündung in einer die Kammer (47) radial nach außen abschließenden Bodenplatte (49) befindet, die der Innenseite des Zellenkranzes entsprechend kufenartig gekrümmt ist.

**Revendications**

1. Dispositif pour individualiser et distribuer un produit granuleux, en particulier sur des machines à semer graine par graine, comportant une roue à cellules (17) tournant à l'intérieur d'un carter (12), avec des cellules (26) ouvertes radialement vers l'extérieur, dont le fond se transforme radialement vers l'intérieur en un perçage traversant (25), vers la périphérie intérieure (24) d'une couronne à cellules (17, 21) et roue dans laquelle une graine est chaque fois susceptible d'être introduite en passant sur un porte d'individualisation, la graine étant expulsée sur un poste de fourniture (33, 47), décalé dans le sens de rotation, à l'aide d'un dispositif travaillant pneumatiquement, qui est disposé radialement à l'intérieur des cellules (26) réalisées dans la couronne à cellules et qui comporte une tête d'éjection (33) dotée d'une embouchure (48) sollicitée par de l'air, qui est balayée par les perçages traversant (25) lors de la rotation de la roue à cellules, caractérisé en ce que la tête d'éjection (33) forme, entre elle et la péripherie intérieure (24) de la couronne à cellules (17, 21), un interstice de coussin d'air sollicité par l'air comprimé et qui est radialement délimité, de façon déplaçable, par rapport au carter.

2. Dispositif selon la revendication 1, caractérisé en ce que la tête d'éjection (33) est adaptée à la forme de la face arrière (24) de la roue à cellules (17), au moins dans une zone entourant l'embouchure (48).

3. Dispositif selon la revendication 1 ou 2, caractérisé en ce que la tête d'éjection (12) est montée par rapport au carter (12), par l'intermédiaire d'éléments de liaison (51, 52, 55, 56) présentant du jeu, de raçon telle qu'elle laisse libre un interstice de déplacement minimal (50) exempt de frottement, dans sa position la plus rapprochée que possible de la roue à cellules (17).

4. Dispositif selon l'une des revendications 1 à 3, caractérisé en ce que la tête d'éjection (33) présente une conduite d'amenée d'air comprimé flexible au moins par sections.

5. Dispositif selon l'une des revendications 1 à 4, caractérisé en ce que l'interstice de coussin d'air est sollicité par de l'air comprimé pouvant être soumis à un réglage.

6. Dispositif selon la revendication 5, caractérisé en ce qu'on organe d'étranglement réglable (41) est prévu dans une conduite d'amenée (40) de la tête d'éjection (33).

7. Dispositif selon la revendication 6, caractérisé en ce qu'un manomètre (42) est prévu dans la conduite d'amenée d'air comprimé, entre l'organe d'étranglement (41) et la tête d'éjection (33).

8. Dispositif selon l'une des revendications 1 à 7, caractérisé en ce que la face intérieure de la tête d'éjection (33) entoure une chambre (47) qui est alimentée en air comprimé dont l'échappement se fait par l'embouchure.

9. Dispositif selon la revendication 8, caractérisé en ce que l'embouchure se trouve dans une plaque de fond (49) qui délimite la chambre (47) radialement vers l'extérieur et qui est incurvée à la façon d'un patin, de façon correspondante à la face intérieure de la couronne à cellules.

**Claims**

1. Device for isolating and distributing granular material, in particular on spacing drills, having a cellular wheel (17) which is rotatable within a housing (12) and has cells (26) open radially towards the outside, the bottom of which merges radially towards the inside into a through bore (25) to the inner circumference (24) of a cell ring (17, 21) and into which one grain in each case can be placed at an isolating station, said grain being ejected at a delivery station (33, 47) offset in the direction of rotation with the aid of a pneumatically operating ejection device which is arranged radially to the inside of the cells (26) formed in the cell ring and has an ejector head (33) which has an air-supplied opening (48) over which the through bores (25) of the cells (26) pass during the revolution of the cellular wheel, characterized in that, between itself and the inner circumference (24) of the cell ring (17, 21), the ejector head (33) forms an air cushion gap surrounding the opening (48, 60, 62, 64, 65) and supplied with compressed air by the latter and is mounted so as to be movable radially to a limited extent relative to the housing.

2. Device according to Claim 1, characterized in that, at least in a region surrounding the opening (48), the ejector head (33) is matched to the shape of the rear side (24) of the cellular wheel (17).

3. Device according to Claim 1 or 2, characterized in that the ejector head (33) is mounted relative to the housing (12) via play-exhibiting connection elements (51, 52, 55, 56) in such a way that, in the closest possible approach to the cellular wheel (17), it leaves a minimum friction-free motional clearance (50).

4. Device according to one of Claims 1 to 3, characterized in that the ejector head (33) has an at least sectionally flexible compressed air feed line (43).

5. Device according to one of Claims 1 to 4, characterized in that the air cushion gap is supplied with adjustable compressed air.

6. Device according to Claim 5, characterized in that an adjustable restriction element (41) is provided in a feed line (40) of the ejector head (33).

7. Device according to Claim 6, characterized in that a pressure manometer (42) is provided in the compressed-air feed line between the restriction element (41) and the ejector head (33).

8. Device according to one of Claims 1 to 7, characterized in that the ejector head (33) surrounds internally a chamber (47) which is supplied with compressed air and from which the latter flows out via the opening.

9. Device according to Claim 8, characterized in that the opening is situated in a baseplate (49) which closes off the chamber (47) radially towards the outside and is curved like a skid in accordance with the inside of the cell ring.

Fig. 1

EP 0 169 333 B1

EP 0 169 333 B1

Fig. 2

Fig. 3

Fig. 5

Fig. 4

16
53
51
55
49
21
15

43
45
44
16
17
46
22
33
15
49
50
48
21
27
24
25
26
23

4

Fig. 6

58          49   57

Fig. 7

60    59

Fig. 8

62    61

64

Fig. 9

65    63

5